**Europäisches Patentamt**

**European Patent Office**

**Office européen des brevets**

(19)

(11) Veröffentlichungsnummer: **0 106 034**
**B1**

(12) **EUROPÄISCHE PATENTSCHRIFT**

(45) Veröffentlichungstag der Patentschrift:
18.03.87

(51) Int. Cl.⁴: **G 01 F 1/24**

(21) Anmeldenummer: **83107245.9**

(22) Anmeldetag: **23.07.83**

(54) **Vorrichtung zur Durchflussmessung von Flüssigkeiten und Gasströmen.**

(30) Priorität: **17.09.82 DE 8226199 U**

(43) Veröffentlichungstag der Anmeldung:
**25.04.84 Patentblatt 84/17**

(45) Bekanntmachung des Hinweises auf die Patenterteilung:
**18.03.87 Patentblatt 87/12**

(84) Benannte Vertragsstaaten:
**DE GB IT NL**

(56) Entgegenhaltungen:
**DE-A-2 255 327**
**DE-A-3 027 763**
**DE-B-1 272 010**
**FR-A-2 115 225**

(73) Patentinhaber: **Kobold, Klaus, Sodener Strasse 120,
D-6233 Kelkheim (DE)**

(72) Erfinder: **Kobold, Klaus, Sodener Strasse 120,
D-6233 Kelkheim (DE)**

(74) Vertreter: **Keil, Rainer A., Dipl.- Phys. Dr.,
Patentanwälte KEIL & SCHAAFHAUSEN
Ammelburgstrasse 34, D-6000 Frankfurt am Main
1 (DE)**

## Beschreibung

Die Erfindung bezieht sich auf eine Vorrichtung zur Durchflußmessung von Flüssigkeiten oder Gasen nach dem Schwebekörperprinzip mit einem in einem Gehäuse angeordneten Schwebemeßkörper und einem außen an dem Gehäuse verschiebbar befestigten Kontaktschalter, wobei das aus Metall oder Kunststoff bestehende Gehäuse des Strömungsmessers eine Auflagefläche aufweist, an welcher in Gehäuselängsrichtung, parallel zueinander zwei L-förmige Befestigungsschienen mittels Schrauben eingebracht sind und in den zwischen den Befestigungsschienen gebildeten Hohlraum eine T-förmige Schiene, die an einer Grundplatte eines den Kontaktschalter enthaltenden Schalterteils befestigt ist, eingeschoben ist.

Eine derartige Vorrichtung ist für die Durchflußmessung von Flüssigkeiten beispielsweise aus der DE-B-1 272 010 bekannt. Der Schwebemeßkörper enthält einen Magneten, der in bestimmter Stellung einen seitlichen, neben der Meßstrecke angeordneten Kontaktschalter betätigt und damit ein Signal auslöst. Um bei kurzen Verschiebewegen des Schwebemeßkörpers genaue und reproduzierbare Meßergebnisse zu erhalten, ist der Schwebemeßkörper mit etwas Spiel axial beweglich in einem in bestimmter Weise ausgebildeten zylindrischen Käfig angeordnet. Der Käfig ist so gestaltet, daß für die Strömung zunächst ein engerer Querschnitt zwischen Schwebemeßkörper und Käfigwand bzw. Gehäusewand der Meßstrecke zur Verfügung steht. Bei Anheben des Schwebemeßkörpers durch steigenden Durchfluß vergrößert sich der Querschnitt, so daß der Hubweg sich verkleinert. Dies ermöglicht eine Verkürzung der Baulänge der Meßvorrichtung. Die dortige Vorrichtung eignet sich lediglich als sogenannter Wächter der bei Unterschreiten bzw. Überschreiten einer vorgegebenen Durchflußmenge einen elektrischen Schaltkreis einschaltet. Durch axiale Verschiebung eines Gehäuses mit dem Kontaktschalter an der als Schwalbenschwanzführung ausgebildeten Befestigungsschiene läßt sich die Durchflußmenge, bei deren Über bzw. Unterschreiten der Schalter betätigt wird, einstellen und dieser Grenzwert mit Hilfe einer Skala am Kontaktschaltergehäuse und eines Zeigers am Strömungsmessergehäuse ablesen. Eine kontinuierliche Anzeige der Stellung des Schwebemeßkörpers ist mit dieser bekannten Vorrichtung nicht möglich.

Bei anderen Vorrichtungen zum Messen bzw. Überwachen strömender Flüssigkeiten oder Gase besteht der Strömungsmesser wenigstens teilweise aus durchsichtigem Material, so daß eine optische Kontrolle der Stellung des Schwebemeßkörpers möglich ist. Strömungsmesser aus durchsichtigem Material z.B. Glas, sind jedoch auch Sicherheitsgründen wegen der Bruchgefahr häufig unerwünscht und bei zahlreichen Anwendungsfällen aus diesem Grunde nicht mehr zugelassen. Besteht das Gehäuse des Strömungsmessers ganz aus Metall oder Kunststoff, so läßt sich die momentane Stellung des Schwebemeßkörpers nicht mehr ablesen.

Aufgabe der vorliegenden Erfindung ist es, bei einer Vorrichtung zur Durchflußmessung der eingangs genannten Art die aufgrund des Kontaktschalters als Wächter fungierende Meßvorrichtung auf konstruktionsmäßig einfache und zuverlässige Art im Baukastenprinzip durch ein Anzeigeinstrument für die jeweilige Stellung des Schwebemeßkörpers im Betrieb zu ergänzen, so daß eine Anpassung an unterschiedliche Meßbereiche und Meßprobleme ohne großen Aufwand möglich ist.

Diese Aufgabe wird bei einer Vorrichtung der eingangs genannten Art erfindungsgemäß dadurch gelöst, daß die Auflagefläche auf der Rückseite des Strömungsmessergehäuses angebracht ist, daß bei mindestens einer der Befestigungsschienen ein Spalt zwischen der Gehäusewand des Strömungsmessers und der Befestigungsschiene freigehalten ist, und daß das Gehäuse eines Instrumentes für die Anzeige der Durchflußmenge mittels zweier in dem Spalt zwischen Gehäusewand und Befestigungsschiene durch Anziehen der Schrauben eingespannter Befestigungslaschen seitlich am Gehäuse des Strömungsmessers angeklemmt ist.

Auf diese Weise sind Strömungsmesser, das den Kontaktschalter enthaltende Schalterteil und das Anzeigeinstrument in einem weiten Anordnungsbereich zueinander kombinierbar. Nicht nur das Schalterteil ist an der Rückseite des Gehäuses des Strömungsmessers in Längsrichtung verschiebbar befestigt, um den Schaltpunkt der gewünschten Durchflußmenge entsprechend einstellen zu können; auch das Anzeigeinstrument kann unter Verwendung der gleichen Befestigungsschienen für verschiedene Meßbereiche in unterschiedlicher Höhe angeklemmt werden. Das Gehäuse des Strömungsmessers kann somit ohne weiteres ganz aus Metall oder Kunststoff, also aus nicht durchsichtigem Material bestehen. Das Gehäuse des Stömungsmessers hat z.B. einen quadratischen oder rechteckigen Querschnitt.

Die L-förmigen Befestigungsschienen sind bei einer besonderen Ausgestaltung der Erfindung jeweils mittels zweier, z.B. als Senkkopfschrauben ausgebildeter Schrauben an der Wand des Gehäuses so befestigt, daß jeweils ein Schenkel nicht an der Gehäusewand anliegt, diese Schenkel einander zugewandt sind und ihre Enden sich nicht berühren, so daß der Hohlraum zwischen Gehäusewand und Innenseite der Schienen zwischen den einander zugewandten Schenkelenden offen ist. Auf diese Weise läßt sich der Schalterteil mit seiner T-Schiene leicht in den Hohlraum einsetzen und findet an den Befestigungsschienen einen sicheren Halt.

Gemäß einer weiteren besonders einfachen Ausgestaltung der Erfindung ist vorgesehen, daß der an der Wand des Gehäuses anliegende Schenkel einer der beiden Befestigungsschienen zur Bildung des Spaltes eine längsverlaufende Nut aufweist.

Das Festklemmen von Schalterteil und Anzeigeinstrument mittels der Befestigungsschrauben kann insbesondere dann auf zuverlässige Weise erreicht werden, wenn gemäß einer anderen Weiterbildung der Erfindung die den Spalt bildende längs verlaufende Nut an dem oder den Schenkeln der Befestigungsschienen in einem Abstand von 10 bis 20 mm von den Schienenenden endet und die Bohrungen zur Aufnahme der Befestigungsschrauben an den nutfreien Schienenenden angeordnet sind. Auf diese Weise kann auch die Elastizität des Mittelteils der Befestigungschienen zum Anklemmen des Anzeigeinstrumentes ausgenutzt werden. Die Auflagefläche der Wand des Gehäuses auf der Rückseite des Strömungsmessers weist dabei vier Gewindebohrungen auf, die jeweils paarweise oben und unten in der Nähe der breiteren Schienenenden angeordnet sind, um die Befestigungsschienen an dem Gehäuse mittels Schrauben, beispielsweise Senkkopfschrauben befestigen zu können.

Das Schalterteil besteht beispielsweise aus einer im wesentlichen rechteckigen Grundplatte, an der auf einer Seite eine längs verlaufende T-Schiene angebracht ist. Im Querbalken der T-Schiene ist beispielsweise der als Kontaktschalter wirkende Schutzkontaktschalter eingegossen, und auf der anderen Seite der Grundplatte des Schalterteils ist eine isolierende Platte mit den Anschlußkontakten für den Schutzgaskontaktschalter befestigt. Auf diese Weise liegt zur Erlangung der erforderlichen Meßempfindlichkeit der Kontaktschalter in unmittelbarer Nähe an dem Strömungsmessergehäuse. Der Querbalken der T-Schiene liegt nicht an der Grundplatte des Schalterteils an, so daß das T-Profil auf einfache Weise in den aus den L-förmigen Befestigungsschienen an der Gehäuserückseite des Strömungsmessers gebildeten Hohlraum einschiebbar ist.

Gemäß einer weiteren vorteilhaften Ausbildung des Erfindungsgedankens ist in der Nähe des unteren Endes des Schalterteils eine durch die Grundplatte und die T-Schiene hindurchgehende Gewindebohrung zur Aufnahme einer Feststellschraube vorhanden, mit welcher die Stellung des Schalterteils am Gehäuse festgelegt werden kann.

Das einfach aufgebaute Schalterteil und die Verbindung mit dem Strömungsmesser über die Befestigungsschienen ermöglichen es, das gleiche Schalterteil für verschiedene Strömungsmesser zu verwenden, wobei ggf. die Länge der Befestigungsschienen an unterschiedliche Hubhöhen anzupassen ist. Bei Kurzhubgeräten ist beispielsweise eine Länge von 100 bis 130 mm der Befestigungsschienen ausreichend. Aufgrund des erfindungsgemäßen Baukastenprinzips läßt sich die Vorrichtung zur Durchflußmessung von Flüssigkeiten oder Gasen unter Verwendung einer geringen Zahl von Einzelteilen an die jeweiligen Meßbereichsverhältnisse anpassen. Der Abstand der Enden der einander zugewandten Schenkel der L-förmigen Befestigungsschienen beträgt z.B. 10 bis 12 mm; die Länge des anderen Schenkels vorzugsweise 3 bis 8 mm, so daß eine Hohlraumtiefe zur Aufnahme des Querbalkens des T-Profils des Schalterteils mit 3 bis 8, vorzugsweise 5 mm, vorhanden ist. Beim Anziehen der Befestigungsschrauben, welche durch die Befestigungsschienen hindurchgreifen, kann die Grundplatte des Schalterteils an der Außenseite der Befestigungsschienen zur Anlage gebracht werden, so daß eine solide Konstruktion entsteht.

Das zum Sichtbarmachen der jeweiligen Stellung des Schwebemeßkörpers im Strömungsmesser vorgesehene Anzeigeinstrument besteht vorzugsweise aus einem rahmenförmigen Mittelteil aus durchsichtigem Material und zwei Seitenplatten aus Metall, wobei an einer der Seitenplatten durch Einschneiden oder Herausbiegen eines rechteckigen oder quadratischen Stückes die flachen Befestigungslaschen ausgebildet sind. Diese Befestigungslaschen können geringfügig dicker sein als der Spalt zwischen Befestigungsschiene und Gehäuserückwand, so daü bei angezogenen Schrauben der Befestigungsschiene die Laschen im Spalt festgeklemmt sind und so auf einfache Weise eine feste, jedoch in der Höhe am Strömungsmesser wählbare Stellung des Anzeigeinstrumentes vorhanden ist.

Das durchsichtige Material des rahmenförmigen Mittelteils kann z.B. Kunststoff, wie Polycarbonat oder Polyacrylglas od. dgl. sein. Das rahmenförmige Mittelteil des Gehäuses des Anzeigeinstrumentes kann an den beiden seitlichen Rändern innen jeweils eine Stufe aufweisen, in die die Seitenplatten einlegbar sind.

Vorzugsweise ist zwischen den Seitenplatten innerhalb des Gehäuses mittels Durchbohrungen in den Seitenplatten durchgreifender Schrauben ein mit einem Zeiger versehenes Zeigergestell befestigt. Das Zeigergestell hat eine übliche konstruktive Gestaltung, wobei zwischen zwei Grundplatten, die mit Hülsen in Abstand gehalten sind, die Zeigerachse angeordnet ist.

Der Zeiger weist vorzugsweise ein ferritsches Teilstück auf oder ist als ganzer ferritisch ausgebildet. Seine Spitze ist an der Stirnseite innerhalb des Gehäuses abgebogen und umfaßt eine in Abstand von der Stirnseite angeordnete Skala seitlich. Am hinteren Ende des Zeigers ist vorzugsweise ein Ausgleichsgewicht vorhanden. Der ferritische Zeiger oder das entsprechende Teilstück ist magnetisch gekoppelt mit dem axial-magnetisierten Magneten innerhalb des

Schwebemeßkörers so daß entsprechend dem strömungsbedingten Hub des Schwebemeßkörpers der Zeiger in gleicher Weise angehoben wird und das abgebogene Zeigerende eine Ablesung des Skalenwertes ermöglicht.

Dabei ist die Stirnseite des Gehäuses z.B. gebogen ausgebildet und in Abstand von der Stirnseite im Inneren des Gehäuses in Schlitze eine entsprechend gebogene Skala eingefügt. Für unterschiedliche Meßbereiche braucht nur die Skala ausgewechselt zu werden wobei die mögliche Längsverschiebung der Befestigungslaschen innerhalb des Spaltes eine unterschiedlich hohe Anordnung des Anzeigeinstrumentes am Strömungsmesser ermöglicht, so daß auf diese Weise zusätzlich eine Anpassung an unterschiedliche Meßbereiche und Stellungen des Meßkörpers innhalb des Strömungsmessers möglich ist. Das einfach ausgebildete und zuverlassig in verschiedener Höhenlage befestigbare Anzeigeinstrument kann nach dem Baukastenprinzip für unterschiedliche Strömungsmesser verwendet werden, wobei durch die konstruktive Gestaltung und Ausbildung der Befestigung eine Anpassung möglich ist, daß die Stellung der Zeigerspitze jeweils mit der Stellung des Schwebemeßkörpers innerhalb des Strömungsmessers übereinstimmt.

Ausführungsbeispiele der Erfindung werden nachfolgend anhand der Zeichnung näher · erläutert.

Es zeigen:

Fig. 1 einen Teil einer Vorrichtung von der Seite im Längsschnitt,

Fig. 2 das gleiche Teil in einem Querschnitt, entlang der Linie II-II von Fig. 1, wobei die Anordnung und Ausbildung der Befestigungsschienen besonders deutlich sichtbar sind,

Fig. 3 in einem Schnitt III-III gemäß Fig. 4 das Schalterteil von oben,

Fig. 4 das Schalterteil im Längsschnitt von der Seite,

Fig. 5 die konstruktive Gestaltung der Vorrichtung von vorn mit seitlich angeordnetem Anzeigeinstrument

Fig. 6 die Vorrichtung von Fig. 5 von der Seite,

Fig. 7 die Seitenplatte des Anzeigeinstrumentes in Draufsicht,

Fig. 8 die Seitenplatte mit aufgeschraubtem Zeigergestell aufgebrochen von vorn,

Fig. 9 das Mittelteil des Gehäuses des Anzeigeinstrumentes mit abgenommener seitlicher Deckplatte dargestellt und

Fig. 10 einen Schnitt entlang X-X gemäß Fig. 9.

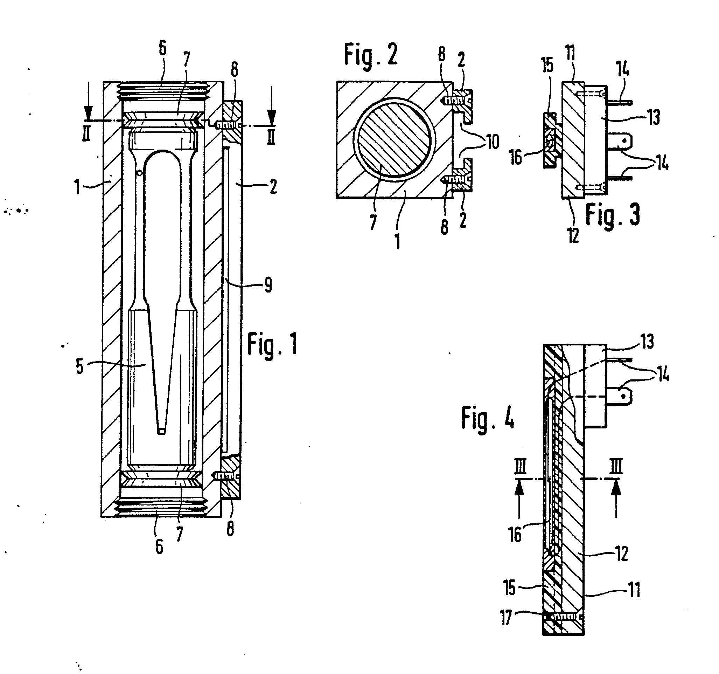

Fig. 1 zeigt ein insgesamt aus Metall bestehendes Gehäuse 1 der Meßvorrichtung von der Seite im Längsschnitt mit auf der Rückseite mittels versenkten Schrauben 8 angeschraubten Befestigungsschienen 2 für einen Schutzgaskontaktschalter 16 und für ein Anzeigeinstrument 4. Im Inneren des Gehäuses 1 ist ein Käfig 5 zur Aufnahme des Schwebemeßkörpers angeordnet. An den Gehäuseenden sind jeweils Innengewinde 6 zum Einschrauben von Anschlußleitungen vorhanden. Die Stellung des Käfigs 5 innerhalb des Gehäuses 1 ist durch zwei Einsatzringe 7 fixiert. Jede der beiden Befestigungsschienen 2 ist jeweils mit zwei Senkkopfschrauben 8 (oben und unten) am Gehäuse 1 befestigt. Zwischen einer oder beiden Schienen 2 und der Gehäuserückwand ist ein Spalt 9 zur Aufnahme von Befestigungslaschen 18 des Gehäuses 19 eines Anzeigeinstrumentes 4 vorhanden. Die Tiefe des Spaltes 9 zwischen dem Gehäuse 1 und der betreffenden Schiene 2 ist etwas geringer als die Dicke der Befestigungslaschen 18, so daß durch Anziehen der Schrauben 8 die Stellung des Anzeigeinstrumentes 4 durch Einklemmen der Befestigungslaschen 18 zwischen Gehäusewand und Befestigungsschienen 2 am Gehäuse 1 fixiert werden kann. Der Spalt 9 ist durch eine entsprechend tiefe Ausnehmung oder Nut auf der dem Gehäuse 1 zugewandten Seite der Schienen 2 längs deren Oberfläche hergestellt. Lediglich an den beiden Enden liegt der Schenkel der L-förmigen Schiene 2 an der Gehäuseoberfläche an und ist dort mittels der Schrauben 8 befestigt. Entsprechende Bohrungen sind in der Wand des Gehäuses 1 ausgebildet.

Fig. 2 zeigt die Anordnung der beiden Befestigungsschienen 2 an dem Gehäuse 1 in einem Schnitt entlang der Linie II-II von Fig. 1 von oben gesehen. Die beiden Schienen 2 sind als Winkelprofil in L-Form ausgebildet und in Abstand voneinander parallel zueinander und zu den Längskanten des Gehäuses 1 an diesem mittels der Schrauben 8 befestigt. Die parallelen und in Abstand von der Oberfläche des Gehäuses 1 verlaufenden abgebogenen Schenkel der Befestigungsschienen 2 sind einander zugewandt und weisen einen Abstand voneinander auf. In den auf diese Weise gebildeten Hohlraum 10 ist ein in Fig. 3 wiedergegebenes Schalterteil 11 einschiebbar.

Das in Fig. 3 im Schnitt III-III gemäß Fig. 4 wiedergegebene Schalterteil 11 besteht aus einer Grundplatte 12, auf die auf der einen Seite eine isolierende Platte 13 mit voneinander isolierten Anschlußsteckkontakten 14 aufgeschraubt ist. Auf der anderen Seite der Grundplatte 12 ist eine T-förmige Schiene 15 mittels Schrauben befestigt. Der Querbalken der T-Schiene 15 weist eine solche Größe auf, daß er in den Hohlraum 10 zwischen den Befestigungsschienen 2 paßt und der an der Grundplatte 12 befestigte gerade Schenkel der T-Schiene ist so breit ausgebildet, daß er den Zwischenraum zwischen den einander zugewandten Schenkeln der Schienen 2 mit geringem Spiel ausfüllt, so daß die T-Schiene 15 in den Hohlraum 10 einschiebbar ist. In den Querbalken der T-Schiene 15 ist der Schutzgaskontaktschalter 16, ein sogenannter Reed-Kontakt, in einer längs verlaufenden Nut eingegossen. Die Enden des Schalters 16 sind mit den Anschlußkontakten 14 über isolierte Drähte elektrisch leitend verbunden.

Der Längsschnitt des Schalterteils 11 von der Seite gemäß Fig. 4 zeigt die Anordnung des Schutzgaskontaktschalters 16 in der Nut des Querbalkens der T-Schiene 15 und die Drahtverbindungen zu den Anschlußkontakten 14. In der Nähe des unteren Endes weist das Schalterteil 11 eine durchgehende Gewindebohrung 17 auf, um mittels einer Senkkopfschraube, die in festgelegtem Zustand gegen die Wand des Gehäuses 1 drückt, das Schalterteil 11 in seiner Stellung an der Wand des Gehäuses 1 festzulegen. Der Kontakt des Schutzgaskontaktschalters 16 wird geschlossen, sobald sich der Schwebemeßkörper des Strömungsmessers innerhalb des Gehäuses 1 auf gleicher Höhe wie die Kontaktenden befindet. Der Schließkontakt wird durch im Schwebemeßkörper angeordnete axial magnetisierte Magnete erzeugt. Die Stellung des Schalterteils 11 an der Gehäusewand wird so ausgewählt und festgelegt, daß entsprechend der Hubhöhe des Schwebemeßkörpers der gewünschte Schaltpunkt gegeben ist. Die konstruktive Gestaltung des Schwebemeßkörpers innerhalb des Gehäuses 1 ist derart, daß ein bistabiles Schaltverhalten gegeben ist und der Hub des Schwebemeßkörpers so begrenzt ist, daß bei Überschreiten des gewünschten Sollwertes der Einfluß des Magneten auf den Schutzgaskontaktschalter 16 bestehenbleibt und der Schalter 16 erst öffnet, wenn durch Unterschreiten der Durchflußmenge die dem Sollwert entsprechende Hubhöhe des Schwebemeßkörpers unterschritten wird.

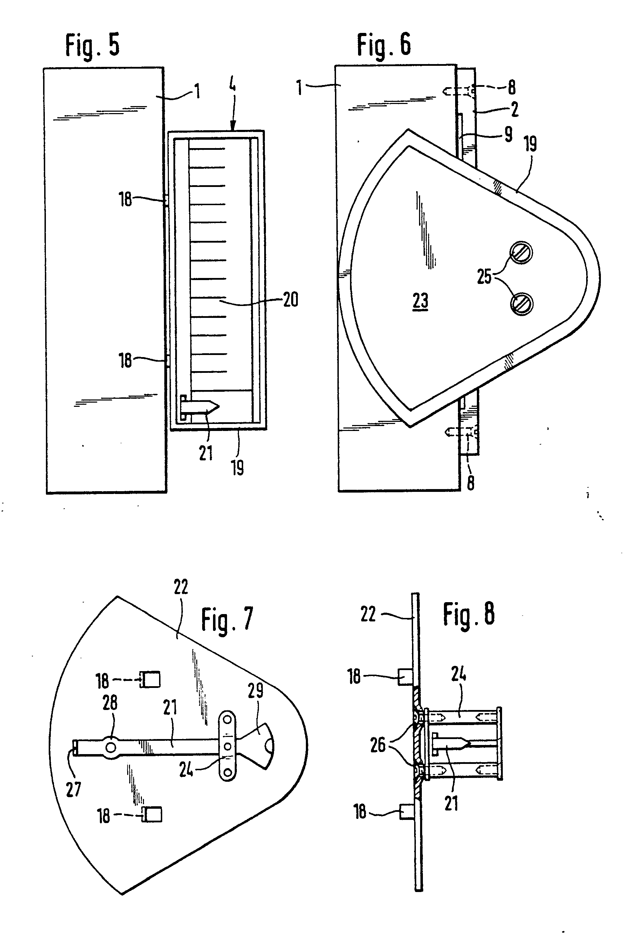

Fig. 5 zeigt, wie das Anzeigeinstrument 4 seitlich am Gehäuse 1 des Strömungsmessers mittels der zwei Befestigungslaschen 18, die auf der Rückseite in den Spalt 9 zwischen Gehäuse 1 und Befestigungsschiene 2 eingreifen, montiert ist. Das Anzeigeinstrument 4 weist ein als rahmenförmiges Mittelteil ausgebildetes Gehäuse 19 mit durchsichtiger Stirnseite auf und ist z.B. aus Kunststoff (Polycarbonat oder Acrylglas od. dgl.) hergestellt. In Abstand von der Gehäusestirnwand ist eine Skala 20 innen so angeordnet, daß sie von einer abgebogenen Zeigerspitze 27 eines Zeigers 21 umfaßt wird, und eine Ablesung der Zeigerstellung anhand der Skala 20 möglich ist.

In Fig. 6 ist der Strömungsmesser von Fig. 5 um 90° gedreht von der Seite wiedergegeben. Am Gehäuse 1 des Strömungsmessers sind auf der Rückseite die Befestigungsschienen 2 mit den Schrauben 8 befestigt. Das Anzeigeinstrument 4 ist mit den von einer Seitenplatte 22 des Gehäuses 19 ausgehenden Befestigungslaschen 18, die in dieser Abbildung nicht zu sehen sind im Spalt 9 festgeklemmt. Die andere Seite des Gehäuses 19 des Anzeigeinstrumentes 4 ist als durchgehende Seitenplatte 23 mit zwei Bohrungen ausgebildet. Durch die Bohrungen können Schrauben 25 eingebracht und in Gewinde eines Zeigergestells 24 zum Befestigen der zweiten Seitenplatte 23 eingeschraubt werden.

In den Fig. 7 und 8 ist die andere Seitenplatte 22 mit dem darauf befestigten Zeigergestell 24 wiedergegeben. Die Befestigungslaschen 18 sind durch Einschneiden, Herausdrücken und Abbiegen eines rechteckigen oder quadratischen Teils aus der aus Metall bestehenden Seitenplatte 22 ausgebildet. Das Zeigergestell 24 ist mit Schrauben 26 an der Seitenplatte 22 befestigt. Der Zeiger 21 hat eine um die Skala 20 gebogene Spitze 27, ein ferritisches Teilstück 28 oder ist als ganzes ferritisch ausgebildet, und hat am anderen Ende ein Ausgleichsgewicht 29.

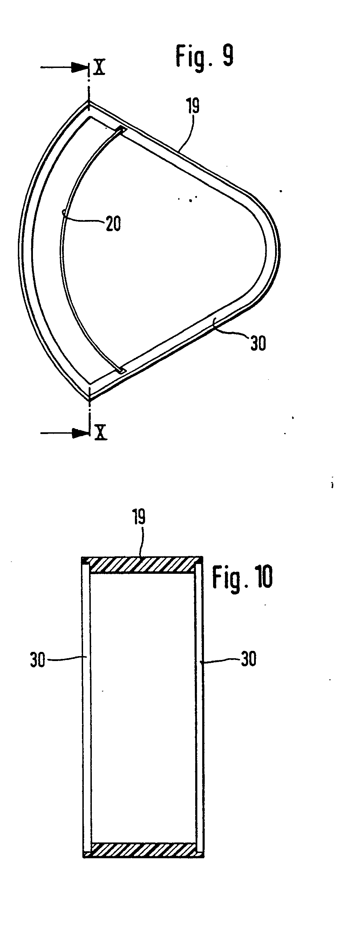

Die Fig. 9 und 10 zeigen das rahmenförmige Mittelstück des Gehäuses 19 des Anzeigeinstrumentes 4 von der Seite mit abgenommenen Seitenplatten 22, 23. Zur Aufnahme der Seitenplatten 22, 23 ist der Rand nach innen jeweils mit einer Stufe 30 versehen. Dadurch ergibt sich eine versenkte Anordnung der Seitenplatten 22, 23 und eine abschließende glatte Seitenfläche mit dem rahmenförmigen Mittelteil des Gehäuses 19. Die Fläche um die Bohrungen in den Seitenplatten 22, 23 für die Befestigungsschrauben 25, 26 des Zeigergestells 24 ist jeweils etwas nach dem Gehäuseinneren eingedrückt, so daß der Senkkopf der Befestigungsschrauben 25, 26 in der Versenkung aufgenommen werden kann. Die Skala 20 ist in Schlitze auf der Innenseite des rahmenförmigen Mittelteils eingesteckt und entsprechend der gebogenen Stirnseite des rahmenförmigen Mittelteils gebogen. Die Skala 20 weist einen Abstand zwischen der einen Seitenwand 23 des Gehäuses 19 auf, um den Durchtritt des Zeigers 21 und das Umfassen der Skala 20 durch die abgebogene Zeigerspitze 27 zu ermöglichen.

Das Anzeigeinstrument 4 wird in einer solchen Stellung am Gehäuse 1 des Strömungsmessers befestigt, daß der von dem Magneten des Schwebemeßkörpers durch Einwirkung auf den ferritischen Zeiger 21 oder das ferritische Zeigerteil 28 angehobene und bewegte Zeiger 21 die der Stellung des Schwebemeßkörpers jeweils entsprechende Durchflußmenge anzeigt. Durch die leicht auswechselbare Skala 20, die Längsverschiebbarkeit des Anzeigeinstrumentes 4 am Gehäuse 1 und ggf. Wechsel des Schwebemeßkörpers läßt sich die Vorrichtung unterschiedlichen Meßbereichen leicht anpassen; die einzelnen Teile der Vorrichtung lassen sich nach dem Baukastensystem leicht zusammenfügen, und für unterschiedliche Meßprobleme brauchen nur wenige Teile ausgewechselt zu werden. Das Anzeigeinstrument 4 ist für unterschiedliche Anzeigefälle grundsätzlich gleich ausgebildet, so daß Fertigung und Lagerhaltung bedeutend vereinfacht sind.

Die erfindungsgemäße konstruktive Gestaltung ermöglicht eine erhebliche Verkleinerung des Anzeigeinstrumentes 4 und des Schalterteils 11, so daß der Raumbedarf für die gesamte Vorrichtung einschließlich des Strömungsmessers erheblich verringert ist.

**Bezugszeichenliste**

1 Strömungsmessergehäuse
2 Befestigungsschienen
4 Anzeigeinstrument
5 Käfig
6 Gewinde
7 Einsatzringe
8 versenkte Schrauben
9 Spalt
10 Hohlraum
11 Schalterteil
12 Grundplatte
13 isolierende Platte
14 Anschlußkontakte
15 T-förmige Schiene
16 Schutzgaskontaktschalter
17 Gewindebohrung
18 Befestigungslaschen
19 Instrumentengehäuse
20 Skala
21 Zeiger
22 Seitenplatte
23 Seitenplatte
24 Zeigergestell
25 Schraube
26 Schraube
27 Zeigerspitze
28 ferritisches Teilstück
29 Ausgleichsgewicht
30 Stufe

**Patentansprüche**

1. Vorrichtung zur Durchflußmessung von Flüssigkeiten oder Gasen nach dem Schwebekörperprinzip mit einem in einem Gehäuse (1) angeordneten Schwebemeßkörper und einem außen an dem Gehäuse (1) verschiebbar befestigten Kontaktschalter (16), wobei das aus Metall oder Kunststoff bestehende Gehäuse (1) des Strömungsmessers eine Auflagefläche aufweist, an welcher in Gehäuselängsrichtung, parallel zueinander zwei L-förmige Befestigungsschienen (2) mittels Schrauben (8) angebracht sind und in den zwischen den Befestigungsschienen (2) gebildeten Hohlraum (10) eine T-förmige Schiene (15), die an einer Grundplatte (12) eines den Kontaktschalter (16) enthaltenden Schalterteils (11) befestigt ist, eingeschoben ist, dadurch gekennzeichnet, daß die Auflagefläche auf der Rückseite des Strömungsmessergehäuses (1) angebracht ist, daß bei mindestens einer der Befestigungsschienen (2) ein Spalt (9) zwischen der Gehäusewand des Strömungsmessers und der Befestigungsschiene (2) freigehalten ist, und daß das Gehäuse (19) eines Instrumentes (4) für die Anzeige der Durchflußmenge mittels zweier in dem Spalt (9) zwischen Gehäusewand und Befestigungsschiene (2) durch Anziehen der Schrauben (8) eingespannter Befestigungslaschen (18) seitlich am Gehäuse (1) des Strömungsmessers angeklemmt ist.

2. Vorrichtung nach Anspruch 1, dadurch gekennzeichnet, daß die L-förmigen Befestigungsschienen (2) jeweils mittels zweier Schrauben (8) an der Wand des Gehäuses (1) so befestigt sind, daß jeweils ein Schenkel nicht an der Gehäusewand anliegt, diese Schenkel einander zugewandt sind und ihre Enden sich nicht berühren, so daß der Hohlraum (10) zwischen Gehäusewand und Innenseite der Schienen (2) zwischen den einander zugewandten Schenkelenden offen ist.

3. Vorrichtung nach Anspruch 1 oder 2, dadurch gekennzeichnet, daß der an der Wand des Gehäuses (1) anliegende Schenkel einer oder beider Befestigungsschienen (2) zur Bildung des Spaltes (9) eine längs verlaufende Nut aufweist.

4. Vorrichtung nach Anspruch 3, dadurch gekennzeichnet, daß die den Spalt (9) bildende längs verlaufende Nut an dem oder den Schenkeln der Befestigungsschienen (2) in einem Abstand von 10 bis 20 mm von den Schienenenden endet und die Bohrungen zur Aufnahme der Befestigungsschrauben (8) an den nutfreien Schienenenden angeordnet sind.

5. Vorrichtung nach einem der Ansprüche 1 bis 4, dadurch gekennzeichnet, daß im Querbalken der T-Schiene (15) ein als Kontaktschalter (16) wirkender Schutzgaskontaktschalter eingegossen ist und auf der anderen Seite der Grundplatte (12) des Schalterteils (11) eine isolierende Platte (13) mit den Anschlußkontakten (14) für den Schutzgaskontaktschalter befestigt ist.

6. Vorrichtung nach einem der Ansprüche 1 bis 5, dadurch gekennzeichnet, daß in der Nähe des unteren Endes des Schalterteils (11) eine durch die Grundplatte (12) und die T-Schiene (15) hindurchgehende Gewindebohrung (17) vorhanden ist.

7. Vorrichtung nach Anspruch 1, dadurch gekennzeichnet, daß das Gehäuse (19) des Anzeigeinstrumentes (4) aus einem rahmenförmigen Mittelteil aus durchsichtigem Material und zwei Seitenplatten (22, 23) aus Metall besteht, wobei an einer der Seitenplatten (22, 23) durch Einschneiden und Herausbiegen eines rechteckigen oder quadratischen Stückes die als flache Befestigungslaschen ausgeführten Befestigungslaschen (18) ausgebildet sind.

8. Vorrichtung nach Anspruch 7, dadurch gekennzeichnet, daß zwischen den Seitenplatten (22, 23) innerhalb des Gehäuses (19) mittels durch Bohrungen in den Seitenplatten (22, 23) durchgreifender Schrauben (25, 26) ein einen Zeiger (21) aufweisendes Zeigergestell (24) befestigt ist.

9. Vorrichtung nach Anspruch 8, dadurch gekennzeichnet, daß der Zeiger (21) ein ferritisches Teilstück (28), eine abgebogene Zeigerspitze (27), die eine an der Stirnseite des Anzeigeinstrumentes (4) im Abstand davon angeordnete Skala (20) seitlich umfaßt, und an seinem hinteren Ende ein Ausgleichsgewicht (29) aufweist.

## Claims

1. Apparatus for the flow measurement of liquids or gases according to the float principle, having a measuring float placed in a casing (1) and a contact switch (16) displaceably fixed to the exterior of the casing (1), the casing (1) consisting of metal or plastic of the flowmeter having a bearing area to which longitudinally of the casing and parallel to one another two L shaped mounting rails (2) are attached by screws (8), a T shaped rail (15) fixed to the baseplate (12) of a switch part (11) containing the contact switch (16) being inserted into the space (10) formed between the mounting rails (2), characterized in that the bearing area is provided on the back of the flowmeter casing (1), that at least at one of the mounting rails (2) a clearance (9) is left free between the wall of the flowmeter casing and the mounting rail (2), and that the case (19) of an instrument (4) for the indication of the flow volume is clamped laterally to the flowmeter casing (1) by means of two fastening fishplates (18) clamped between the wall of the casing and the mounting rail (2) by tightening of the screws (8).

2. Apparatus according to claim 1, characterized in that each of the L shaped mounting rails (2) is fixed to the wall of the casing (1) by two screws (8) in such manner that always one leg does not rest against the wall of the casing, that these legs face one another and that their ends do not touch, so that the space (10) between the wall of the casing and the inner side of the rails (2) is open between the leg ends facing one another.

3. Apparatus according to claims 1 or 2, characterized in that the leg of one or both mounting rails (2), which rests against the wall of the casing (1), has a longitudinal groove to form the clearance (9).

4. Apparatus according to claim 3, characterized in that the longitudinal groove on the leg or legs of the mounting rails (2) which forms the clearance (9) ends at a space of 10 to 20 mm from the rail ends and that the bores serving to receive the fastening screws (8) are disposed at the groovefree rail ends.

5. Apparatus according to one of the claims 1 to 4, characterized in that a dry reed contact switch acting as contact switch (16) is moulded into the traverse of the T-rail (15) and on the other side of the baseplate (12) of the switch part (11) an insulating plate (13) is fastened provided with the connections (14) for the dry reed contact switch.

6. Apparatus according to one of the claims 1 to 5, characterized in that near the lower end of the switch part (11) a threaded bore (17) passing through the baseplate (12) and the T-rail (15) is provided.

7. Apparatus according to claim 1, characterized in that the case (19) of the indicating instrument(4) consists of a frameshaped center part of transparent material and two metal side plates (22, 23), on one of the side plates (22, 23) the fastening fishplates (18) shaped as flat fastening fishplates being formed by incision and outward bending of a rectangular or square piece.

8. Apparatus according to claim 7, characterized in that between the side plates (22, 23) within the case (19) a pointer frame (24) provided with a pointer (21) is fixed by means of screws (25, 26) penetrating bores provided in the side plates (22, 23).

9. Apparatus according to claim 8, characterized in that the pointer (21) comprises a ferrite part (28), a bent off point (27) laterally embracing a scale (20) disposed at the front face of the indicating instrument (4) and spaced therefrom, and at its rear end a balance weight (29).

## Revendications

1. Appareil pour mesurer le débit de liquides ou de gazes selon le principe des corps flottants, ayant un corps mesureur flottant disposé dans une boîte (1) et un commutateur de contact (16) fixé de manière déplacable à l'extérieur de la boîte (1), la boîte (1) en métal ou matière plastique du débitmètre ayant une surface d'appui, à laquelle sont fixées au moyen de vis (8) longitudinalement à la boîte (1) et parallèlement l'une à l'autre deux glissières de fixation en L (2), une glissière en T (15) fixée au socle (12) d'une partie (11) du commutateur contenant le commutateur de contact (16) étant insérée dans l'espace (10) formé entre les glissières de fixation (2), caractérisé en ce que la surface d'appui se trouve au dos de la boîte (1) du débitmètre, qu'auprès au moins d'une des glissières de fixation (2) un espace (9) est laissé libre entre la paroi de la boîte du débitmètre et la glissière de fixation (2), et que la boîte (19) d'un instrument indicateur du débit (4) est serrée latéralement à la boîte (1) du débitmètre par deux éclisses de fixation (18) serrées dans l'espace (9) entre la paroi de la boîte et la glissière de fixation (2) par serrage des vis (8).

2. Appareil selon revendication 1, caractérisé en ce que chacune des glissières de fixation en L (2) est fixée à la paroi de la boîte (1) par deux vis (8) de telle facon qu'en toujours une aile ne s'appuie pas contre la paroi de la boîte, que ces ailes sont arrangées en face l'une de l'autre, et que leurs bouts ne se touchent pas, de sorte que l'espace (10) entre la paroi de la boîte et le côté intérieur des glissières (2) est ouvert entre les bouts des ailes se trouvant en face l'un de l'autre.

3. Appareil selon revendication 1 ou 2, caractérisé en ce que l'aile d'une ou de toutes les deux des glissières de fixation (2) s'appuyant contre la paroi de la boîte (1) est pourvue d'une rainure longitudinale pour former l'espace (9).

4. Appareil selon revendication 3, caractérisé en ce que la rainure longitudinale sur l'aile ou les ailes des glissières de fixation (2) formant l'espace (9) se termine à de 10 à 20 mm des bouts des glissières, et que les alésages pour recevoir les vis de fixation (8) sont disposés aux bouts des glissières sans rainures.

5. Appareil selon une des revendications 1 à 4, caractérisé en ce qu'un commutateur de contact sous gaz protecteur agitant comme commutateur de contact (16) se trouve moulé dans la traverse de la glissière en T (15), et que sur l'autre côté du socle (12) de la partie (11) du commutateur une plaque isolante (13) pourvue des contactes de jonction (14) pour le commutateur de contact sous gaz protecteur est fixée.

6. Appareil selon une des revendications 1 à 5, caractérisé en ce que près du bout inférieur de la partie (11) du commutateur se trouve un alésage taraudé (17) passant par le socle (12) et la glissière en T (15).

7. Appareil selon revendication 1, caractérisé en ce que la boîte (19) de l'instrument indicateur (4) consiste d'une pièce centrale forme cadre en matière transparente et de deux plaques latérales (22, 23) en métal, sur une des plaques latérales (22, 23) étant formées par entaillage et pliage vers l'extérieur d'une pièce rectangulaire ou quadratique les éclisses de fixation formées en éclisses de fixation plates (18).

8. Appareil selon revendication 7, caractérisé en ce qu'entre les plaques latérales (22, 23) à l'intérieur de la boîte (19) un bâti (24) pour aiguille pourvu d'une aiguille (21) est fixé par des vis (25, 26) passant par des alésages disposés dans les plaques latérales (22, 23).

9. Appareil selon revendication 8, caractérisé en ce que l'aiguille (21) comporte une partie ferritique (28), une pointe d'aiguille pliée (27) embrassant latéralement un cadrant (20) disposé au front de l'instrument indicateur (4) et en écarté, et à son bout arrière un contrepoids (29).

Fig. 1

Fig. 2

Fig. 3

Fig. 4

Fig. 5

Fig. 6

Fig. 7

Fig. 8

Fig. 9

19

20

30

X

X

19

Fig. 10

30

30